# FASCICULE DE BREVET EUROPEEN

(11) **EP 1 849 299 B1**
(45) Date de publication et mention de la délivrance du brevet: **02.09.2015**
(21) Numéro de dépôt: 06710299.6
(22) Date de dépôt: 01.02.2006
(51) Int. Cl.: G11B 27/034, H04N 5/262

(54) **PROCEDE ET DISPOSITIF D'EDITION DE PROGRAMME AUDIOVISUEL**
VERFAHREN UND EINRICHTUNG ZUM EDITIEREN VON AUDIOVISUELLEN PROGRAMMEN
METHOD AND DEVICE FOR AUDIOVISUAL PROGRAMME EDITING

(30) Priorité: 01.02.2005 FR 0501061
(43) Date de publication de la demande: 31.10.2007
(73) Titulaire: AWOX, 34830 Clapiers (FR)
(72) Inventeur: MOLINIE, Alain, 34830 Clapiers (FR); LAVIGNE, Eric, 34830 Clapiers (FR); LECLAIRE, Vincent, 34830 Clapiers (FR)
(74) Mandataire: Cornuejols, Georges
(86) Numéro de dépôt international: PCT/IB2006/000179
(87) Numéro de publication internationale: WO 2006/082494

(56) Documents cités:
- WO-A-98/56188
- US-A- 4 876 600
- US-A- 5 801 785

## Description

La présente invention concerne un procédé et un dispositif d'édition d'un programme audiovisuel. Elle s'applique, en particulier à création, par son utilisateur, d'une page comportant de multiples fenêtres provenant de sources hétérogènes notamment tout ou partie de sites et services Internet et de sources de données et de media locales.

De nombreux professionnels sont actuellement obligés d'utiliser une pluralité d'écrans, d'ordinateur ou vidéo pour suivre plusieurs sources d'information qui les intéressent dans le cadre de leur travail, par exemple images de vidéo-surveillance, programmes audiovisuels, écrans de cotation financière, écrans de supervision d'unités de production, vidéo conférence, visiophone ou interphone.

On connaît, dans le domaine audiovisuel, l'incrustation d'une image dans une autre, appelé, en anglais "picture in picture". Cette technique permet d'insérer une image provenant d'une source, par exemple une première chaîne de télévision, dans une image provenant d'une deuxième source, par exemple une autre chaîne de télévision. Cette technique, qui est mise en oeuvre au niveau électronique, présente de nombreux inconvénients. D'une part, c'est l'ensemble de l'image provenant de la première source qui est affichée, même si seulement une partie de cette image présente un intérêt pour l'utilisateur. D'autres part, elle se limite aux sources d'images vidéo et n'est pas adaptée aux sources de media et de données hétérogènes provenant d'internet, qui sont gérées à un niveau logiciel. De plus, le nombre d'images qui peuvent être incrustées est limité, en général à une, voir, dans le domaine de la vidéo-surveillance, à une matrice régulière de quatre, voire neuf, images. Par ailleurs, les images incrustées ne peuvent se superposer les unes aux autres. L'utilisateur ne peut donc ni sélectionner une partie de l'image à incruster, ni choisir la forme et chacune des dimensions de l'image incrustée.

On connaît, dans le domaine informatique, le multi-fenêtrage qui consiste à ouvrir plusieurs fenêtres simultanément, par exemple une fenêtre affichant une partie d'une page traitée par un traitement de texte, une autre fenêtre affichant une partie d'un tableau traité par un tableur et une troisième fenêtre affichant une page de navigation sur internet. Cette technique présente aussi de nombreux inconvénients. D'une part, pour celle des fenêtres qui est active, l'ensemble des bordures de la fenêtre, qui proviennent du logiciel de traitement ou de navigation, sont affichées. D'autre part, le contenu des fenêtres, en particulier le contenu des fenêtres de navigation sur internet, n'est pas rafraîchit. D'autre part, la combinaison des images ne peut pas être mémorisée et l'utilisateur doit re-créer cette combinaison à chaque fois qu'il redémarre son ordinateur.

La présente invention vise à remédier à ces inconvénients. Elle vise, en particulier, à réduire le nombre d'écran qu'un utilisateur doit surveiller simultanément en rassemblant, sur un même écran, des informations provenant de différentes sources. Le problème que résout la présente invention est donc un problème technique et d'utilisabilité.

A cet effet, selon un premier aspect, la présente invention vise un procédé d'édition de programme audiovisuel, caractérisé en ce qu'il comporte :
- de manière itérative, une étape d'édition d'image combinée comportant :
   - une étape de sélection d'une source d'image,
   - une étape de sélection d'une partie de l'image sélectionnée et
   - une étape de sélection d'un format d'affichage de ladite partie d'image sélectionnée, dans une image combinée ;
- après la fin de l'étape d'édition d'image combinée, une étape de mémorisation de chaque source d'image, de chaque partie d'image et de chaque format d'affichage de l'image combinée et
- une étape d'affichage de l'image combinée, au cours de laquelle, chaque partie d'image affichée est automatiquement rafraîchie.

On observe que chaque image sélectionné peut provenir d'un média généré localement à partir de données médias et/ou hétérogènes issues d'Internet ou de l'environnement local.

Grâce à ces dispositions, l'affichage de marges et de barres d'outil peut être éliminé, l'utilisateur peut retrouver l'image combinée à chaque fois qu'il le souhaite et les parties d'image sont mises à jour automatiquement.

La présente invention permet ainsi l'unification, dans le seul écran, de sources hétérogènes avec "traduction" dans un format permettant l'affichage et mise au standard visuel.

Selon des caractéristiques particulières, au cours de l'étape d'affichage, pour au moins une partie d'image, chaque rafraîchissement qui modifie l'apparence de ladite partie d'image est signalé.

Grâce à ces dispositions, l'attention de l'utilisateur est appelée vers le nouveau contenu de ladite partie d'image.

Selon des caractéristiques particulières, le procédé tel que succinctement exposé ci-dessus comporte une étape de sélection d'une source de signaux sonores et, au cours de l'étape d'affichage de l'image combinée, on fait émettre les signaux sonores provenant de ladite source de signaux sonores.

Grâce à ces dispositions, l'utilisateur peut suivre un programme audiovisuel.

Selon des caractéristiques particulières, au cours d'au moins une étape de sélection d'une source d'image, on sélectionne une adresse électronique d'une page accessible sur un réseau informatique.

Grâce à ces dispositions, l'image combinée peut comporter des pages de sites accessibles par internet.

Selon des caractéristiques particulières, au cours d'au moins une étape de sélection d'une source d'image, on sélectionne un fichier vidéo.

Grâce à ces dispositions, l'utilisateur peut regarder un contenu audiovisuel, tout en surveillant des informations qui l'intéressent, dans d'autres parties d'image.

Selon des caractéristiques particulières, au cours d'au moins une étape de sélection d'une partie d'image, on sélectionne, avec un dispositif de pointage, au moins deux coins opposés d'un rectangle.

Grâce à ces dispositions, la sélection d'une partie d'image est aisée et rapide.

Selon des caractéristiques particulières, au cours d'au moins une étape de sélection d'une partie d'image, on analyse le contenu d'un code descriptif d'une page fournie par la source d'image et on extrait des parties d'images adaptées à être sélectionnées puis l'utilisateur sélectionne, avec un dispositif de pointage, une dite partie d'image.

Grâce à ces dispositions, la partie d'image sélectionnée est désignée par son contenu indépendamment de sa position dans une page ou de la longueur de la page.

Selon des caractéristiques particulières, au cours d'au moins une étape de sélection d'une partie d'image, on déplace et on lâche, avec un dispositif de pointage ladite partie d'image sélectionnée.

Grâce à ces dispositions, l'organisation de l'image combinée est aisée et rapide.

Selon des caractéristiques particulières, au cours d'au moins une étape de sélection d'un format d'affichage d'une partie d'image sélectionnée, au moins deux bords de deux parties d'image sont automatiquement accolés.

Grâce à ces dispositions, des parties de l'image combinée qui pourraient être perdues, servent à l'affichage des parties d'image sélectionnées.

Selon des caractéristiques particulières, au cours de l'étape d'affichage de l'image combinée, pour au moins une des parties d'image, on affiche uniquement ladite partie d'image si son contenu a été modifié au cours d'une durée antérieure prédéterminée.

Selon un deuxième aspect, la présente invention vise un dispositif d'édition de programme audiovisuel, caractérisé en ce qu'il comporte :
- un moyen d'édition d'image combinée, adapté à effectuer, de manière intérative :
   - une sélection d'une source d'image,
   - une sélection d'une partie de l'image sélectionnée et
   - une sélection d'un format d'affichage de ladite partie d'image sélectionnée, dans une image combinée ;
- un moyen de mémorisation adapté à mémoriser chaque source d'image, de chaque partie d'image et de chaque format d'affichage de l'image combinée et
- un moyen d'affichage de l'image combinée adapté à rafraîchir automatiquement chaque partie d'image affichée est automatiquement rafraîchie.

Grâce à ces dispositions, l'affichage de marges et de barres d'outil peut être éliminé, l'utilisateur peut retrouver l'image combinée à chaque fois qu'il le souhaite et les parties d'image sont mises à jour automatiquement.

Selon des caractéristiques particulières, le moyen de rafraîchissement est adapté, pour au moins une partie d'image, à signaler chaque rafraîchissement qui modifie l'apparence de ladite partie d'image.

Selon des caractéristiques particulières, le dispositif tel que succinctement exposé ci-dessus comporte un moyen de sélection d'une source de signaux sonores et le moyen d'affichage de l'image combinée est adapté à émettre les signaux sonores provenant de ladite source de signaux sonores.

Selon des caractéristiques particulières, le moyen d'édition d'image combinée est adapté, pour la sélection d'une source d'image, à sélectionner une adresse électronique d'une page accessible sur un réseau informatique.

Selon des caractéristiques particulières, le moyen d'édition d'image combinée est adapté, pour la sélection d'une source d'image, à sélectionner un fichier vidéo.

Selon des caractéristiques particulières, le moyen d'édition d'image combinée comporte un dispositif de pointage et est adapté, pour la sélection d'une partie d'image, à sélectionner, avec ledit dispositif de pointage, au moins deux coins opposés d'un rectangle.

Selon des caractéristiques particulières, le moyen de sélection d'une partie d'image est adapté à analyse le contenu d'un code descriptif d'une page fournie par la source d'image pour extraire des parties d'images adaptées à être sélectionnées par l'utilisateur, avec un dispositif de pointage.

Selon des caractéristiques particulières, le moyen d'édition d'image combinée comporte un dispositif de pointage et est adapté, pour la sélection d'une partie d'image, à sélectionner, avec ledit dispositif de pointage, à déplacer et lâcher ladite partie d'image sélectionnée.

Selon des caractéristiques particulières, le moyen d'édition d'image combinée est adapté, pour la sélection d'un format d'image, à accoler automatiquement au moins deux bords de deux parties d'image.

Les avantages, buts et caractéristiques particulières du dispositif objet du deuxième aspect de la présente invention étant identiques à ceux du procédé objet du premier aspect de la présente invention, ils ne sont pas rappelés ici.

D'autres avantages, buts et caractéristiques de la présente invention ressortiront de la description qui va suivre, faite, dans un but explicatif et nullement limitatif, en regard des dessins annexés dans lesquels :
- la figure 1 représente, de manière schématique, un mode de réalisation particulier du dispositif d'édition d'image objet de la présente invention,
- les figures 2A et 2B représentent, sous forme d'un logigramme, un mode de réalisation particulier du procédé d'édition d'image objet de la présente invention et
- la figure 3 représente, schématiquement, une télécommande préférentiellement mise en oeuvre en combinaison avec le dispositif illustré en figure 1, au cours d'une phase de fonctionnement optionnelle de ce dispositif.

Bien que les dispositifs décrits pour accéder à un réseau informatique, par exemple internet, soient, dans la description, décrits comme des terminaux utilisateurs, particulièrement de type ordinateur individuel, tous les types de terminaux peuvent être mis en oeuvre, par exemple assistants numériques personnels (connus sous le nom de PDA pour personal digital assistant) et téléphones, en particulier mobiles.

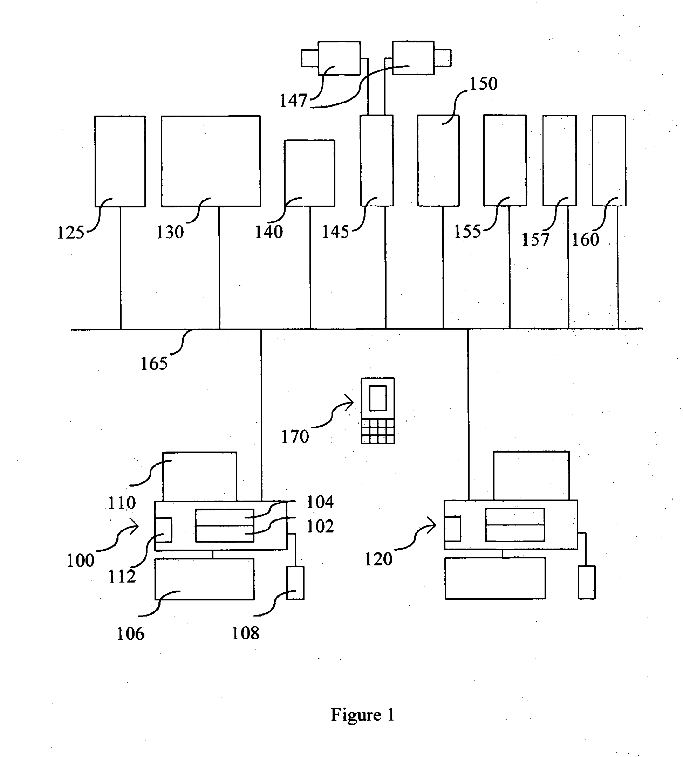

On observe, en figure 1, un réseau domestique comportant un terminal utilisateur 100, un terminal utilisateur 120, un serveur 125, téléviseur 130, un interphone 140, un système de surveillance 145 comportant des caméras de vidéo-surveillance 147, un système domotique 150, une chaîne musicale 155, un décodeur de signaux vidéos 157 et un lecteur de films 160. Tous ces éléments sont reliés entre eux par un réseau 165. Certains de ces éléments sont commandés par une télécommande 170.

Le terminal utilisateur 100, de type connu, par exemple sous la forme d'un ordinateur personnel (connu sous le nom de PC pour personal computer) comporte une unité centrale 102, une mémoire non volatile 104, un clavier 106, un dispositif de pointage 108, un écran de visualisation 110 et un modem 112. Le terminal utilisateur 100 est adapté à mettre en oeuvre un logiciel de navigation sur Internet et un logiciel mettant en oeuvre le procédé objet de la présente invention.

La mémoire non volatile 104 prend, par exemple, la forme d'un disque dur. Le clavier 106 est un clavier à touche ou un écran tactile, par exemple. Le dispositif de pointage 108 prend, par exemple la forme d'une souris, d'un trackball, d'un touchpad ou d'un écran tactile. Le modem 112 peut être adapté à un réseau téléphonique commuté, à un réseau large-bande, à un réseau câblé, à un réseau satellitaire ou à un réseau terrestre sans fil, par exemple.

Le terminal utilisateur 120 est similaire au terminal utilisateur 100. Les composants, sous-systèmes et logiciels du terminal utilisateur 120 ne sont donc pas détaillés ici.

L'interphone 140 est adapté à fournir des signaux sonores et/ou des images d'un visiteur, de manière connue en soi. La chaîne musicale 155 est adaptée à lire des supports musicaux et à émettre des signaux sonores.

Le lecteur de films 160 est de type camescope, magnétoscope ou lecteur de disques optiques.

Conformément à la présente invention, le terminal utilisateur 100 constitue un dispositif d'édition de programme audiovisuel. L'unité centrale 102, en combinaison avec le logiciel adapté à mettre en oeuvre le procédé objet de la présente invention, constitue un moyen d'édition d'image combinée, adapté à effectuer, de manière intérative :
- une sélection d'une source d'image,
- une sélection d'une partie de l'image sélectionnée et
- une sélection d'un format d'affichage de ladite partie d'image sélectionnée, dans une image combinée.

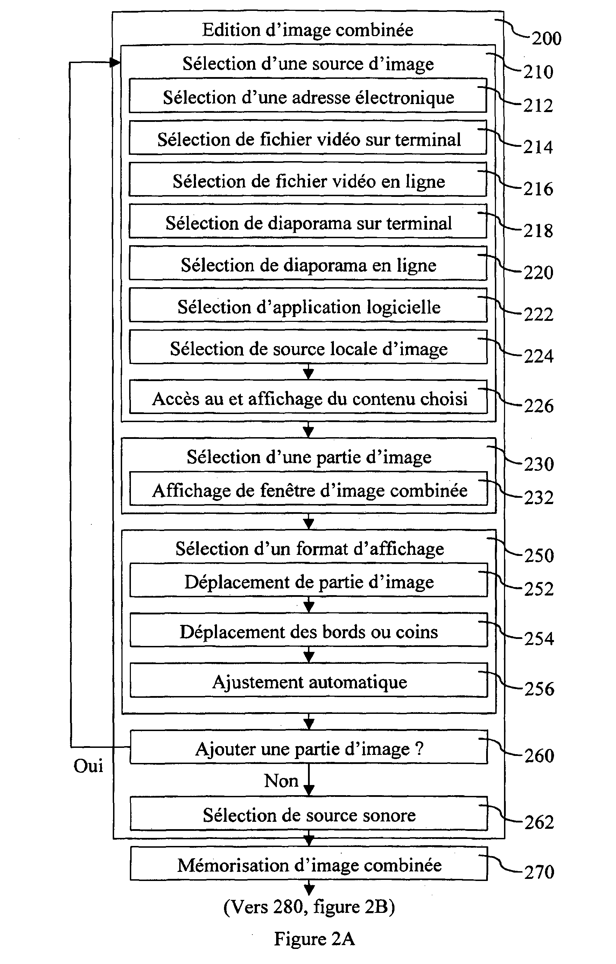

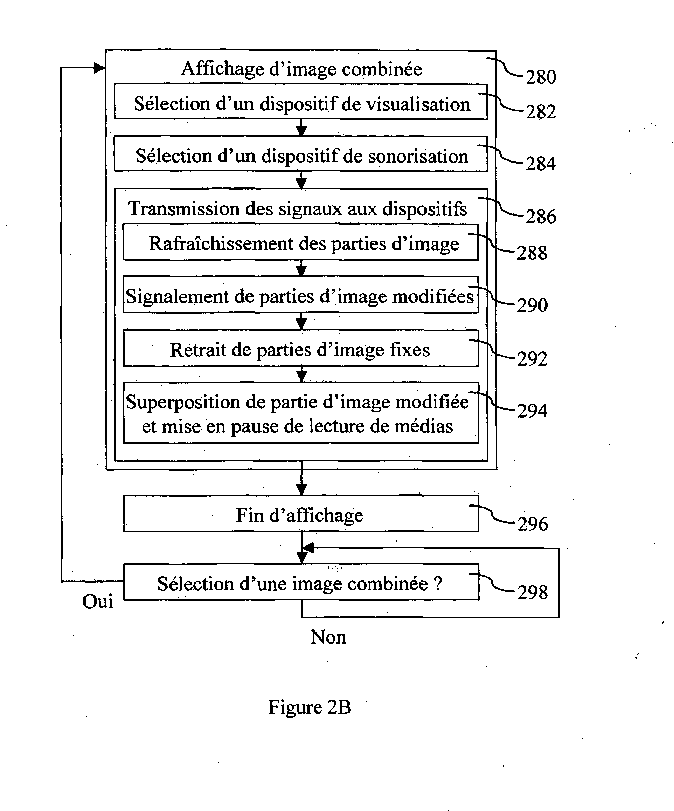

A cet effet, l'unité centrale 102 met, par exemple, en oeuvre un logiciel implémentant les étapes décrites en regard de la figure 2.

Chaque sélection de chaque source d'image est effectuée en sélectionnant :
- soit une adresse électronique d'une page accessible sur le réseau informatique, par l'intermédiaire du logiciel de navigation,
- soit un fichier d'images animées, par exemple vidéo ou animation, sur le terminal utilisateur ou sur le réseau,
- soit un fichier de diaporama, sur le terminal utilisateur ou sur le réseau,
- soit une application logicielle disponible localement, par exemple un éditeur de courrier électronique,
- soit une source locale d'image, ici l'interphone 140, le système de surveillance 145 comportant des caméras de vidéo-surveillance 147, le décodeur de signaux vidéos 157 ou le lecteur de films 160.

Une fois la source d'image sélectionnée, l'utilisateur en sélectionne une partie avec le dispositif de pointage 108, par exemple en sélectionnant une partie rectangulaire de l'image, selon des techniques connues, par exemple en sélectionnant deux coins opposés du rectangle.

Puis l'utilisateur sélectionne, avec le dispositif de pointage 108, la partie d'image sélectionnée précédemment, rend active une fenêtre représentant l'image combinée et lâche la partie d'image sélectionnée dans la fenêtre représentant l'image combinée.

Puis l'utilisateur déplace la partie d'image sélectionnée et ajuste le format de la partie d'image en en déplaçant les bords ou les coins, comme dans un logiciel de dessin ou d'édition de diaporamas. L'utilisateur peut aussi choisir que l'ajustage se fasse automatiquement, les bords de la partie d'image nouvellement ajoutée étant alors déplacés pour venir se juxtaposer aux bords des parties d'images déjà incorporées dans l'image combinée.

On observe que la création d'une page combinée est en fait une association d'agents logiciels indépendants, chacun d'entre eux étant responsable de l'affichage du contenu d'une partie d'image à un endroit qui lui est fourni par l'application qui les combine. Le logiciel de combinaison dispose donc d'une bibliothèque (extensible) d'agents et les informe de l'arrangement désiré.

On observe que plusieurs types d'agent logiciels peuvent être mis en oeuvre:
- le premier type d'agent constitue virtuellement une image provenant d'une source, en extrait une partie en fonction des coordonnées de points dans l'image, effectue un formatage de la partie d'image et l'affiche dans la partie d'image combinée destinée à accueillir ladite partie d'image ; l'avantage d'un tel type d'agent est qu'il est universel, c'est à dire qu'il peut travailler sur des images quelconques, provenant de sources d'images vidéos, par exemple film et images de vidéo-surveillance mais son inconvénient est que sur des images décrites par des langages descriptifs, par exemple HTML, il ne repère pas les données en fonction de leur signification et peut afficher une partie d'image sans intérêt lorsque la longueur de la page fournie par la source d'image varie ;
- le deuxième type d'agent travaille sur le contenu de la page, dès que la page est disponible, elle est analysée pour extraire des zones susceptibles d'être sélectionnées, en fonction de leur description dans le code descriptif de la page (par exemple en code HTML), par exemple, tous les graphiques de la page, sont rendus sélectionnables ; lors de la sélection, l'utilisateur ne peut sélectionner que les parties d'images ainsi extraites, par utilisation de la souris ; éventuellement, un ou plusieurs agents de ce type effectuent un codage d'une nouvelle page à partir des parties sélectionnées avec chaque agent et
- le troisième type d'agent travaille sur des pages ou parties de pages pré-traitées par leurs fournisseurs - ces pages ou parties de pages sont directement sélectionnables par les utilisateurs, soit par leur adresse électronique URL, soit par sélection avec la souris.

Les deux derniers types d'agents permettent d'effectuer une sélection d'une partie d'image en fonction de sa description ou son contenu ou de sa signification indépendamment de la manière dont elle peut être affichée dans une configuration donnée.

Après la fin de la sélection de partie d'image, l'utilisateur peut, à tout moment, éditer l'image combinée pour ajouter, modifier ou retirer des parties d'images ou leur format, cette édition étant décrite avec plus de détails en regard de la figure 2.

Après ou à la fin de la phase d'édition, l'unité centrale 102 effectue la mémorisation, en mémoire non volatile 104, de chaque source d'image, de chaque partie d'image et de chaque format d'affichage de l'image combinée. Cette mémorisation est, par exemple, effectuée automatiquement, après confirmation de la part de l'utilisateur, lors de chaque fermeture de la fenêtre représentant l'image combinée, si l'une des données mémorisées a été modifiée.

Préférentiellement, l'image combinée est affichée dans une fenêtre qui ne comporte, dans au moins un mode d'affichage, aucune marge et aucune barre d'outil.

L'image combinée peut être affichée sur l'écran de visualisation 110 du terminal utilisateur 100 ou être transmise sur le réseau dans un format compatible avec chaque moyen d'affichage choisi pour afficher l'image combinée.

Tant que l'image combinée est affichée et/ou transmise sur le réseau, l'unité centrale 102 effectue automatiquement un rafraîchissement automatique de chaque partie d'image incorporée dans l'image combinée.

A cet effet, hormis pour les fichiers audio ou vidéo dont la lecture est continue, l'unité centrale 102 requiert, à intervalles de temps réguliers, la transmission, par les sites correspondants, de chaque page accessible sur le réseau dont une partie est incorporée dans l'image combinée. Ce rafraîchissement automatique peut être le fait d'un programme (par exemple script) incorporé dans la page en question ou d'une commande de rafraîchissement provenant d'un autre programme externe à la page.

On observe que l'utilisateur peut choisir une fréquence de rafraîchissement, ou laisser une fréquence de rafraîchissement donnée par défaut, par exemple, plusieurs fois par seconde pour les sources d'images animées ou vidéo et plusieurs fois par heure pour les autres sources.

Pour les sources d'image animées, par exemple provenant de signaux vidéo, l'unité centrale incorpore, en permanence, les parties d'image sélectionnées dans l'image combinée.

Selon une variante, ou selon un mode de fonctionnement que l'utilisateur peut choisir, l'unité centrale 102 est adaptée, pour au moins une partie des parties d'images, par exemple pour au moins les parties d'image provenant de sites lointains, à signaler chaque modification du contenu de ladite partie d'image, par exemple en plaçant, pendant quelques secondes, un cadre blanc autour de la partie d'image dont le contenu a été modifié.

Selon une autre variante, ou selon un mode de fonctionnement que l'utilisateur peut choisir, l'unité centrale 102 est adaptée, lorsque le contenu d'une partie d'image n'a pas été modifié pendant une période prédéterminée, par exemple vingt secondes, à retirer de l'affichage la partie d'image en question, jusqu'à ce que son contenu soit modifié. Au moins l'une des autres parties d'image occupent alors automatiquement l'espace laissé vide par la disparition provisoire de la partie d'image en question. Par exemple, l'une des parties d'image est désignée, par l'utilisateur, comme prioritaire pour occuper ledit espace.

Ainsi, pour au moins une des parties d'image de l'image combinée, on affiche uniquement ladite partie d'image si son contenu a été modifié au cours d'une durée antérieure prédéterminée.

Cet automatisme, que l'utilisateur peut décider d'enclencher, lui permet de se concentrer sur les contenus vivants, tout en étant sûr d'être averti de toute modification d'information l'intéressant.

En variante, on affiche le contenu qui vient de changer par dessus le reste de l'image.

Lors de l'édition, l'unité centrale 102 est adaptée à sélectionner au moins une source de signaux sonores, par exemple une source de signaux vidéo et l'unité centrale 102 est adaptée à joindre les signaux audio en provenance de ladite source aux signaux représentatifs de l'image combinée ou, lorsque l'affichage est local, à faire émettre lesdits signaux sonores par le terminal utilisateur.

En variante, dès qu'un signal provient d'une autre source désignée comme prioritaire, par exemple un interphone ou un téléphone, l'unité centrale remplace le signal audio précédemment transmis, par le signal audio prioritaire. Eventuellement, l'unité centrale provoque une pause de lecture de fichiers audio ou vidéo.

Préférentiellement, les fonctions d'affichage et de transmission de l'unité centrale 102 sont effectuées en tâche de fond, seule les fonctions d'édition de l'image combinée étant effectuées en dehors des tâches de fond.

On observe, en figures 2A et 2B, différentes étapes d'un mode particulier de réalisation du procédé objet de la présente invention, comportant essentiellement :
- de manière itérative, une étape d'édition d'image combinée 200 (figure 2A) comportant :
   - une étape de sélection d'une source d'image 210,
   - une étape de sélection d'une partie de l'image sélectionnée 230 et
   - une étape de sélection d'un format d'affichage de ladite partie d'image sélectionnée, dans une image combinée 250 ;
- après la fin de l'étape d'édition d'image combinée 200, une étape de mémorisation 270 de chaque source d'image, de chaque partie d'image et de chaque format d'affichage de l'image combinée et
- une étape d'affichage de l'image combinée 280 , au cours de laquelle, chaque partie d'image affichée est automatiquement rafraîchie.

Au cours d'une étape de sélection d'une source d'image 210, on sélectionne :
- soit une adresse électronique d'une page accessible sur le réseau informatique, par l'intermédiaire du logiciel de navigation, étape 212,
- soit un fichier d'images animées, par exemple vidéo ou animation, sur le terminal utilisateur, étape 214, ou sur le réseau, étape 216,
- soit un fichier de diaporama, sur le terminal utilisateur, étape 218 ou sur le réseau, étape 220,
- soit une application logicielle disponible localement, par exemple un éditeur de courrier électronique, étape 222,
- soit une source locale d'image, par exemple l'interphone 140, le système de surveillance 145 comportant des caméras de vidéo-surveillance 147, le décodeur de signaux vidéos 157 ou le lecteur de films 160, étape 224.

A la suite de chacune de ces étapes, une application logicielle donnant accès et affichant le contenu choisi est lancée, selon des techniques connues, étape 226, par exemple dans une fenêtre particulière.

Une fois une source d'image sélectionnée, l'utilisateur en sélectionne une partie, étape 230, avec le dispositif de pointage 108, par exemple en sélectionnant une partie rectangulaire de l'image, selon des techniques connues, par exemple en sélectionnant deux coins opposés du rectangle.

Puis l'utilisateur sélectionne, avec le dispositif de pointage 108, la partie d'image sélectionnée précédemment, étape 232, rend active une fenêtre représentant l'image combinée, étape 234 et lâche la partie d'image sélectionnée dans la fenêtre représentant l'image combinée, étape 236.

Puis, au cours de l'étape 250, l'utilisateur déplace la partie d'image sélectionnée, étape 252, et ajuste le format de la partie d'image en en déplaçant les bords ou les coins, étape 254, comme dans un logiciel de dessin ou d'édition de diaporamas. L'utilisateur peut aussi choisir que l'ajustage se fasse automatiquement, les bords de la partie d'image nouvellement ajoutée étant alors déplacés pour venir se juxtaposer aux bords des parties d'images déjà incorporées dans l'image combinée, étape 256.

En variante (non représentée), l'utilisateur peut choisir une fréquence de rafraîchissement, ou laisser une fréquence de rafraîchissement donnée par défaut, par exemple, plusieurs fois par seconde pour les sources d'images animées ou vidéo et plusieurs fois par heure pour les autres sources.

Puis, au cours d'une étape 260, on demande à l'utilisateur, par exemple dans une fenêtre, s'il souhaite ajouter une partie d'image à l'image combinée. Si oui, on retourne à l'étape 210. Sinon, on demande à l'utilisateur, à quelles parties d'image le son diffusé doit être associé, étape 262, et, éventuellement, l'utilisateur clique sur chaque partie d'image dont le son associé doit être diffusé, par exemple une partie d'image représentant un film, l'interphone et les signaux sonores liés à l'application logicielle d'édition de courriers électroniques ou l'utilisateur indique qu'il ne souhaite pas de diffusion sonore et ferme la fenêtre.

En variante, l'utilisateur peut sélectionner au moins une source de signaux sonore prioritaire, par exemple un interphone ou un téléphone, pour que dès qu'un signal provient d'une source prioritaire, on remplace le signal audio précédemment transmis par le signal audio prioritaire et, éventuellement on fait une pause de lecture des signaux audio et/ou vidéo.

La phase d'édition est alors terminée.

On observe que l'utilisateur peut, à tout moment, choisir d'éditer l'image combinée (étape non représentée), par exemple en cliquant sur une icône représentant l'application logicielle, dans une barre d'outil ou dans un répertoire, ou en faisant apparaître, par exemple avec le bouton droit de sa souris ou avec la télécommande, un menu de l'application logicielle et en sélectionnant "modifier". Ce menu peut aussi avoir pour fonction "pause/reprise", "paramètres" et "quitter", par exemple, mais ces fonctions ne sont pas détaillées dans la description, étant bien connues de l'homme du métier.

Chaque phase d'édition comporte les étapes décrites ci-dessus, si une nouvelle partie d'image est ajoutée, une étape de retrait d'une partie d'image, par sélection d'une partie et choix d'une fonction d'effacement, ou une étape de modification de paramètres d'affichage d'une partie d'image, comme indiqué ci-dessus en ce qui concerne le format, ou de paramétrage de l'application, par exemple nombre de couleurs affichées, définition, affichage des seules parties d'image à contenu vivant, sélection de source sonore ...

Après ou à la fin de la phase d'édition, on effectue la mémorisation en mémoire non volatile 104, de chaque source d'image, de chaque partie d'image, de chaque source sonore et de chaque format d'affichage de l'image combinée, étape 270. Cette étape de mémorisation est, par exemple, effectuée automatiquement, après confirmation de la part de l'utilisateur, lors de chaque fermeture de la fenêtre représentant l'image combinée, si l'une des données mémorisées a été modifiée.

On observe que l'utilisateur peut donner un nom à l'image combinée, ce nom étant alors mémorisé. Ceci permet que plusieurs utilisateurs utilisent, chacun, plusieurs images combinées, par exemple à différents moments de la journée.

Au cours de l'étape d'affichage de l'image combinée 280 (figure 2B), l'utilisateur choisit au moins un dispositif de visualisation parmi ceux qui sont accessibles sur le réseau, par exemple le téléviseur 130, étape 282 et, éventuellement, un dispositif de diffusion d'ondes sonores, parmi ceux qui sont accessibles sur le réseau, étape 284.

Ainsi, par exemple, l'image combinée peut être affichée sur l'écran de visualisation 110 du terminal utilisateur 100 et/ou être transmise sur le réseau dans un format compatible avec chaque moyen d'affichage choisi pour afficher l'image combinée.

La sélection de chaque dispositif de visualisation peut être effectué par une télécommande mettant en oeuvre le protocole UPnP, par exemple.

Au cours d'une étape 286, des signaux représentatifs de l'image combinée sont transmis au dispositif de visualisation et des signaux représentatifs des signaux sonores provenant des sources sonores sélectionnées sont transmis aux dispositifs de diffusion d'ondes sonores.

Préférentiellement, l'image combinée est affichée dans une fenêtre qui ne comporte, dans au moins un mode d'affichage, aucune marge et aucune barre d'outil.

Au cours de l'étape 286, chaque partie d'image affichée est automatiquement rafraîchie, étape 288. A cet effet, on requiert, à intervalles de temps réguliers, la transmission, par les sites correspondants, de chaque page accessible sur le réseau.

Pour les sources d'image animées, par exemple provenant de signaux vidéo, on incorpore, en permanence, les parties d'images animées sélectionnées dans l'image combinée.

Selon un mode de fonctionnement que l'utilisateur peut choisir, pour au moins une partie des parties d'images, par exemple pour au moins les parties d'image provenant de sites lointains, on signale chaque modification du contenu de ladite partie d'image, par exemple en plaçant, pendant quelques secondes, un cadre blanc autour de la partie d'image dont le contenu a été modifié, étape 290.

Selon un mode de fonctionnement que l'utilisateur peut choisir, lorsque le contenu d'une partie d'image n'a pas été modifié pendant une période prédéterminée, par exemple vingt secondes, on retire de l'affichage la partie d'image en question, jusqu'à ce que son contenu soit modifié, étape 292. Au moins l'une des autres parties d'image occupent alors automatiquement l'espace laissé vide par la disparition provisoire de la partie d'image en question. Par exemple, l'une des parties d'image est désignée, par l'utilisateur, comme prioritaire pour occuper ledit espace. Ainsi, pour au moins une des parties d'image de l'image combinée, on affiche uniquement ladite partie d'image si son contenu a été modifié au cours d'une durée antérieure prédéterminée. Cet automatisme, que l'utilisateur peut décider d'enclencher, lui permet de se concentrer sur les contenus vivants, tout en étant sûr d'être averti de toute modification d'information l'intéressant.

En variante, au cours de l'étape 294, on affiche le contenu qui vient de changer par dessus le reste de l'image combinée.

En variante, au cours de l'étape 294, on effectue une mise en pause de la lecture des médias lors de l'affichage d'un contenu qui vient de changer.

Au cours d'une étape 296, l'utilisateur décide de ne plus afficher l'image combinée, par exemple par utilisation d'une télécommande ou d'un menu du logiciel implémentant le procédé objet de la présente invention et le processus est achevé.

Au cours d'une étape 298, on détermine si l'utilisateur a sélectionné une image combinée, parmi les différentes images combinées dont a été mémorisé en mémoire non volatile 104, chaque source d'image, chaque partie d'image, chaque source sonore et chaque format d'affichage au cours de l'une des étapes 270.

Si oui, on retourne à l'étape 280. Sinon, l'étape 298 est réitérée.

Si, au cours de l'étape 298, l'utilisateur sélectionne une des images incorporées dans l'image combinée, par exemple par sélection en utilisant les touches de flèches de déplacement d'une télécommande et validation avec la touche de validation, seule cette image sélectionnée est alors affichée en plein écran par le dispositif de visualisation, la touche "retour" de la télécommande permettant de revenir à l'affichage de l'image combinée.

Préférentiellement, les fonctions d'affichage et de transmission de signaux sont effectuées en tâche de fond, seule les fonctions d'édition de l'image combinée étant effectuées en dehors des tâches de fond.

Si, avec la télécommande, l'utilisateur sélectionne un média accessible par internet, on affiche la page correspondant à ladite adresse et l'application logicielle repère automatiquement tous les liens hypertextes disponibles sur la page ainsi que leur position dans la page (en abscisses et en ordonnées).

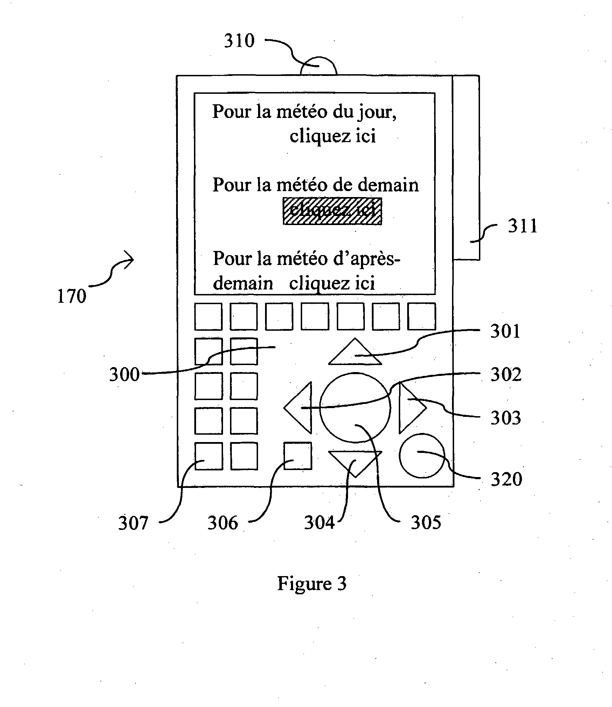

Par utilisation des flèches du clavier de la télécommande, l'utilisateur peut choisir et sélectionner un lien de la page (voir figure 3).

Ainsi, dans certains modes de réalisation de la présente invention, on fournit à l'utilisateur un navigateur Internet embarqué pour des environnement qui n'en disposent pas: On utilise ici comme définition d'un "navigateur", une application qui se sert du réseau Internet et qui présente des données en provenant sous une forme graphique.

A cet effet, l'appareil qui a accès à Internet, ici le terminal 100, effectue le repérage de tous les liens présents sur la page et les classe dans une liste qu'il conserve. Par exemple, ce repérage est effectué par des fonctions de base du système d'exploitation ou du navigateur, que le logiciel appelle. D'autres techniques peuvent être mises en oeuvre, telle l'analyse du code source HTML pour détecter les balises signalant l'existence de liens dans la page.

Chaque lien est ensuite repéré par sa position physique dans la page affichée et les relations entre les positions physiques des liens sont mises en correspondance avec les flèches du clavier de la télécommande dans un tableau à deux dimensions dans lequel chaque case est occupée, au plus, par un lien.

Par exemple, en partant d'un premier lien, l'autre lien qui est à droite du premier lien dans un angle dans l'intervalle [+45°, -45°[ et le plus proche du premier lien est affecté à la case de droite du tableau, par rapport à la case correspondant au premier lien.

En partant du premier lien représenté dans une case donnée de ce tableau, lorsque l'utilisateur appuie sur la flèche droite du clavier de la télécommande, il provoque le surlignage du lien présent dans la case du tableau à droite de la case affectée au premier lien.

Le premier lien surligné est le premier lien de la liste lors du premier affichage de la page. Ainsi, le surlignage est effectué en partant du lien le plus en haut à gauche puis en suivant un algorithme de recherche du lien le plus "proche" en fonction de la touche de navigation ou flèche 301 à 304 pressée.

Une fois le lien qui l'intéresse surligné, l'utilisateur appuie sur la touche de validation 305 pour sélectionner le lien, comme s'il avait cliqué dessus avec un dispositif de pointage de type souris.

Pour sortir de la page, l'utilisateur appuie sur la touche de retour 306 de sa télécommande 170.

On observe, en figure 3, que la télécommande 170 comporte un clavier 300 comportant des touches de flèche 301 à 304, une touche de validation 305, une touche de retour 306 et d'autres touches 307, un émetteur/récepteur de signaux visuels 310, par exemple de signaux infrarouge et un émetteur/récepteur de signaux radio 320. La télécommande 170 est adaptée à commander tout ou partie des appareils illustrés en figure 1 et, en particulier, le téléviseur 130 et le décodeurs de signaux 157 par l'intermédiaire de signaux infrarouges et le terminal 100, par l'intermédiaire de signaux radios.

Bien que la télécommande 170 soit décrite ici sous la forme d'une télécommande classique, elle peut, conformément à la présente invention, prendre la forme d'un assistant numérique personnel (connu sous le nom de "PDA" pour personal digital assistant) ou d'ordinateur de poche (connu sous le nom de "pocket PC") ou de téléphone mobile.

Ainsi, la télécommande 170 communique à la fois sur un support radio, avec le terminal utilisateur 100 et sur un support Infrarouge, avec le téléviseur 130 ou avec le décodeur de signaux 157, de manière connue en soi.

Par la mise en oeuvre de la présente invention, l'utilisateur peut avoir, sur une entrée auxiliaire de son téléviseur, par exemple auxiliaire 1, une chaîne, une sortie du lecteur de films 160 et, sur une entrée auxiliaire, par exemple auxiliaire 2, l'accès à une liste des images combinées qu'il a créé.

La télécommande 170 donne ainsi accès, avec une ergonomie simplifiée mettant en oeuvre les touches de flèche et de validation, à des images combinées constituant des chaînes télévisuelles personnalisées et à des contenus accessibles par l'intermédiaire des liens des parties d'image de ces images combinées.

On observe que la télécommande 170 commande aussi le son et les pause et reprise de diffusion d'un média.

Dans une variante, la télécommande comporte un moyen de détection d'orientation. Par exemple, ce moyen de détection d'orientation comporte au moins un gyroscope, les déplacements relatifs du boîtier de la télécommande par rapport à chaque gyroscope, dont l'orientation dans l'espace est sensiblement constante, étant mesurés et pris en compte pour réaliser un moyen de pointage dont les fonctions sont similaires à celle d'une souris, par exemple.

Si, comme illustré en figure 3, l'interface utilisateur graphique (en anglais GUI pour graphical user interface) se trouve sur la télécommande, les signaux d'orientation provenant de chaque gyroscope sont mis en oeuvre par les circuits de la télécommande pour déplacer un curseur dans cette interface. Si, en variante, l'interface utilisateur graphique se trouve sur un écran externe à la télécommande, par exemple un écran de télévision ou d'ordinateur, les signaux de position de curseur sont transmis à distance, au système informatique. La télécommande comporte aussi au moins une touche dont les fonctions sont similaires à celles d'un bouton de souris. On comprend qu'une telle télécommande permet de lancer, stopper, pauser la lecture des médias et d'effectuer d'autres fonctions, par l'intermédiaires de menus ou d'icônes, par exemple.

On observe qu'un système d'exploitation léger suffit pour mettre en oeuvre la présente invention, en particulier sur les appareils qui ne sont pas des ordinateurs, par exemple le décodeur de signaux 157.

## Revendications

1. Procédé d'édition de programme audiovisuel, **caractérisé en ce qu'**il comporte :
- de manière itérative, une étape d'édition d'image combinée (200) comportant :
- une étape de sélection d'une source d'image (210),
- une étape de sélection (230) d'une partie de l'image sélectionnée et
- une étape de sélection (250) d'un format d'affichage de ladite partie d'image sélectionnée, dans une image combinée ;
- après la fin de l'étape d'édition d'image combinée, une étape de mémorisation (270) de chaque source d'image, de chaque partie d'image et de chaque format d'affichage de l'image combinée et
- une étape d'affichage (280) de l'image combinée, au cours de laquelle, chaque partie d'image affichée est automatiquement rafraîchie.

2. Procédé selon la revendication 1, **caractérisé en ce que**, au cours de l'étape d'affichage (280), pour au moins une partie d'image, chaque rafraîchissement qui modifie l'apparence de ladite partie d'image est signalé (290).

3. Procédé selon l'une quelconque des revendications 1 ou 2, **caractérisé en ce qu'**il comporte une étape de sélection d'une source de signaux sonores (262) et, au cours de l'étape d'affichage de l'image combinée, on fait émettre les signaux sonores provenant de ladite source de signaux sonores.

4. Procédé selon l'une quelconque des revendications 1 à 3, **caractérisé en ce que**, au cours d'au moins une étape de sélection d'une source d'image (210), on sélectionne une adresse électronique d'une page accessible sur un réseau informatique (212).

5. Procédé selon l'une quelconque des revendications 1 à 4, **caractérisé en ce que**, au cours d'au moins une étape de sélection d'une source d'image (210), on sélectionne un fichier vidéo (214, 216).

6. Procédé selon l'une quelconque des revendications 1 à 5, **caractérisé en ce que**, au cours d'au moins une étape de sélection d'une partie d'image (230), on sélectionne, avec un dispositif de pointage, au moins deux coins opposés d'un rectangle.

7. Procédé selon l'une quelconque des revendications 1 à 6, **caractérisé en ce que**, au cours d'au moins une étape de sélection d'une partie d'image (230), on analyse le contenu d'un code descriptif d'une page fournie par la source d'image et on extrait des parties d'images adaptées à être sélectionnées puis l'utilisateur sélectionne, avec un dispositif de pointage, une dite partie d'image.

8. Procédé selon l'une quelconque des revendications 1 à 7, **caractérisé en ce que**, au cours d'au moins une étape de sélection d'une partie d'image (230), on déplace et on lâche, avec un dispositif de pointage, ladite partie d'image sélectionnée.

9. Procédé selon l'une quelconque des revendications 1 à 8, **caractérisé en ce que**, au cours d'au moins une étape de sélection d'un format d'affichage (250) d'une partie d'image sélectionnée, au moins deux bords de deux parties d'image sont automatiquement accolés.

10. Procédé selon l'une quelconque des revendications 1 à 9, **caractérisé en ce que**, au cours de l'étape d'affichage de l'image combinée (280), pour au moins une des parties d'image, on affiche uniquement ladite partie d'image si son contenu a été modifié au cours d'une durée antérieure prédéterminée (292).

11. Dispositif d'édition de programme audiovisuel, **caractérisé en ce qu'**il comporte :
- un moyen d'édition d'image combinée, adapté à effectuer, de manière intérative :
- une sélection d'une source d'image,
- une sélection d'une partie de l'image sélectionnée et
- une sélection d'un format d'affichage de ladite partie d'image sélectionnée, dans une image combinée ;
- un moyen de mémorisation adapté à mémoriser chaque source d'image, de chaque partie d'image et de chaque format d'affichage de l'image combinée et
- un moyen d'affichage de l'image combinée adapté à rafraîchir automatiquement chaque partie d'image affichée est automatiquement rafraîchie.

12. Dispositif selon la revendication 11, **caractérisé en ce que** le moyen de rafraîchissement est adapté, pour au moins une partie d'image, à signaler chaque rafraîchissement qui modifie l'apparence de ladite partie d'image.

13. Dispositif selon l'une quelconque des revendications 11 ou 12, **caractérisé en ce qu'**il comporte un moyen de sélection d'une source de signaux sonores et le moyen d'affichage de l'image combinée est adapté à émettre les signaux sonores provenant de ladite source de signaux sonores.

14. Dispositif selon l'une quelconque des revendications 11 à 13, **caractérisé en ce que** le moyen d'édition d'image combinée est adapté, pour la sélection d'une source d'image, à sélectionner une adresse électronique d'une page accessible sur un réseau informatique.

15. Dispositif selon l'une quelconque des revendications 11 à 14, **caractérisé en ce que** le moyen d'édition d'image combinée est adapté, pour la sélection d'une source d'image, à sélectionner un fichier vidéo.

16. Dispositif selon l'une quelconque des revendications 11 à 15, **caractérisé en ce que** le moyen d'édition d'image combinée comporte un dispositif de pointage et est adapté, pour la sélection d'une partie d'image, à sélectionner, avec ledit dispositif de pointage, au moins deux coins opposés d'un rectangle.

17. Dispositif selon l'une quelconque des revendications 11 à 16, **caractérisé en ce que** le moyen de sélection d'une partie d'image est adapté à analyse le contenu d'un code descriptif d'une page fournie par la source d'image pour extraire des parties d'images adaptées à être sélectionnées par l'utilisateur, avec un dispositif de pointage.

18. Dispositif selon l'une quelconque des revendications 11 à 17, **caractérisé en ce que** le moyen d'édition d'image combinée comporte un dispositif de pointage et est adapté, pour la sélection d'une partie d'image, à sélectionner, avec ledit dispositif de pointage, à déplacer et lâcher ladite partie d'image sélectionnée.

19. Dispositif selon l'une quelconque des revendications 11 à 18, **caractérisé en ce que** le moyen d'édition d'image combinée est adapté, pour la sélection d'un format d'image, à accoler automatiquement au moins deux bords de deux parties d'image.

20. Dispositif selon l'une quelconque des revendications 11 à 19, **caractérisé en ce que** le moyen d'affichage de l'image combinée est adapté, pour au moins une des parties d'image, à afficher uniquement ladite partie d'image si son contenu a été modifié au cours d'une durée antérieure prédéterminée.

## Patentansprüche

1. Editionsverfahren für ein audiovisuelles Programm, **dadurch gekennzeichnet, dass** es Folgendes umfasst:
- in iterativer Weise einen Schritt der kombinierten Bildbearbeitung (200), der Folgendes umfasst:
- einen Schritt der Auswahl einer Bildquelle (210),
- einen Schritt der Auswahl (230) eines Ausschnitts des ausgewählten Bildes und
- einen Schritt der Auswahl (250) eines Anzeigeformats für den ausgewählten Bildausschnitt in einem kombinierten Bild;
- nach Abschluss des Schritts der kombinierten Bildbearbeitung einen Schritt der Speicherung (270) jeder Bildquelle, jedes Bildausschnitts und des Anzeigeformats des kombinierten Bildes und
- einen Schritt der Anzeige (280) des kombinierten Bildes, während dessen jeder angezeigte Bildausschnitt automatisch aktualisiert wird.

2. Verfahren nach Anspruch 1, **dadurch gekennzeichnet, dass** während jedes Anzeigeschritts (280) für mindestens einen Bildausschnitt jede Aktualisierung, die die Erscheinungsform dieses Bildausschnitts verändert, angezeigt wird (290).

3. Verfahren nach einem der Ansprüche 1 oder 2, **dadurch gekennzeichnet, dass** es einen Schritt zur Auswahl einer Tonsignalquelle (262) umfasst und während des Schritts der Anzeige des kombinierten Bildes die aus der Tonsignalquelle kommenden Tonsignale ausgegeben werden.

4. Verfahren nach einem der Ansprüche 1 bis 3, **dadurch gekennzeichnet, dass** während mindestens eines Schritts zur Auswahl einer Bildquelle (210) eine elektronische Adresse einer in einem Computernetzwerk (212) verfügbaren Seite ausgewählt wird.

5. Verfahren nach einem der Ansprüche 1 bis 4, **dadurch gekennzeichnet, dass** während mindestens eines Schritts zur Auswahl einer Bildquelle (210) eine Videodatei (214, 216) ausgewählt wird.

6. Verfahren nach einem der Ansprüche 1 bis 5, **dadurch gekennzeichnet, dass** während mindestens eines Schritts zur Auswahl eines Bildausschnitts (230) mit einem Zeigegerät mindestens zwei gegenüberliegende Ecken eines Rechtecks ausgewählt werden.

7. Verfahren nach einem der Ansprüche 1 bis 6, **dadurch gekennzeichnet, dass** während mindestens eines Schritts zur Auswahl eines Bildausschnitts (230) der Inhalt eines beschreibenden Codes einer von der Bildquelle gelieferten Seite analysiert wird und geeignete auszuwählende Bildausschnitte extrahiert werden, damit der Nutzer anschließend mit einem Zeigegerät einen dieser Bildausschnitte auswählt.

8. Verfahren nach einem der Ansprüche 1 bis 7, **dadurch gekennzeichnet, dass** während mindestens eines Schritts zur Auswahl eines Bildausschnitts (230) der ausgewählte Bildausschnitt mit einem Zeigegerät verschoben und losgelassen wird.

9. Verfahren nach einem der Ansprüche 1 bis 8, **dadurch gekennzeichnet, dass** während mindestens eines Schritts zur Auswahl eines Anzeigeformats (250) eines ausgewählten Bildausschnitts mindestens zwei Ränder von zwei Bildausschnitten automatisch aneinandergefügt werden.

10. Verfahren nach einem der Ansprüche 1 bis 9, **dadurch gekennzeichnet, dass** während des Schritts der Anzeige des kombinierten Bildes (280) von mindestens einem der Bildausschnitte nur dieser Bildausschnitt angezeigt wird, wenn sein Inhalt während einer zuvor festgelegten Dauer geändert wurde (292).

11. Editionsvorrichtung für ein audiovisuelles Programm, **dadurch gekennzeichnet, dass** sie Folgendes umfasst:
- ein Mittel zur Bearbeitung eines kombinierten Bildes, dazu geeignet, in iterativer Weise Folgendes auszuführen:
- eine Auswahl einer Bildquelle,
- eine Auswahl eines Ausschnitts des gewählten Bildes und
- eine Auswahl eines Anzeigeformats für den ausgewählten Bildausschnitt in einem kombinierten Bild;
- ein Mittel zur Speicherung jeder Bildquelle, jedes Bildausschnitts und jedes Anzeigeformats des kombinierten Bildes und
- ein Mittel zur Anzeige des kombinierten Bildes, das dazu geeignet ist, jeden angezeigten Bildausschnitt automatisch zu aktualisieren.

12. Vorrichtung nach Anspruch 11, **dadurch gekennzeichnet, dass** das Mittel für die Aktualisierung geeignet ist, für mindestens einen Bildausschnitt jede Aktualisierung anzuzeigen, die die Erscheinungsform dieses Bildausschnitts verändert.

13. Vorrichtung nach einem der Ansprüche 11 oder 12, **dadurch gekennzeichnet, dass** es ein Mittel zur Auswahl einer Tonsignalquelle umfasst und das Mittel für die Anzeige des kombinierten Bildes geeignet ist, die aus der Tonsignalquelle kommenden Tonsignale auszugeben.

14. Vorrichtung nach einem der Ansprüche 11 bis 13, **dadurch gekennzeichnet, dass** das Mittel zur Bearbeitung eines kombinierten Bildes geeignet ist, für die Auswahl einer Bildquelle eine elektronische Adresse einer in einem Computernetzwerk verfügbaren Seite auszuwählen.

15. Vorrichtung nach einem der Ansprüche 11 bis 14, **dadurch gekennzeichnet, dass** das Mittel zur Bearbeitung eines kombinierten Bildes geeignet ist, für die Auswahl einer Bildquelle eine Videodatei auszuwählen.

16. Verfahren nach einem der Ansprüche 11 bis 15, **dadurch gekennzeichnet, dass** das Mittel zur Bearbeitung eines kombinierten Bildes ein Zeigegerät umfasst und geeignet ist, für die Auswahl eines Bildausschnitts mit diesem Zeigegerät mindestens zwei gegenüberliegende Ecken eines Rechtecks auszuwählen.

17. Vorrichtung nach einem der Ansprüche 11 bis 16, **dadurch gekennzeichnet, dass** das Mittel zur Auswahl eines Bildausschnitts geeignet ist, den Inhalt eines beschreibenden Codes einer von der Bildquelle gelieferten Seite zu analysieren, um die Bildausschnitte zu extrahieren, die geeignet sind, um durch den Nutzer mit einem Zeigegerät ausgewählt zu werden.

18. Vorrichtung nach einem der Ansprüche 11 bis 17, **dadurch gekennzeichnet, dass** das Mittel zur Bearbeitung eines kombinierten Bildes ein Zeigegerät umfasst und geeignet ist, für die Auswahl eines Bildausschnitts mit diesem Zeigegerät mindestens zwei gegenüberliegende Ecken eines Rechtecks auszuwählen.

19. Vorrichtung nach einem der Ansprüche 11 bis 18, **dadurch gekennzeichnet, dass** das Mittel zur Bearbeitung eines kombinierten Bildes geeignet ist, für die Auswahl eines Bildformats automatisch mindestens zwei Ränder von zwei Bildausschnitten aneinanderzufügen.

20. Vorrichtung nach einem der Ansprüche 11 bis 19, **dadurch gekennzeichnet, dass** das Mittel der Anzeige des kombinierten Bildes geeignet ist, für mindestens einen Bildausschnitt nur diesen Bildausschnitt anzuzeigen, wenn sein Inhalt während einer zuvor festgelegten Dauer geändert wurde.

## Claims

1. Method for editing audio-visual programs, **characterized in that** it comprises:
- in an iterative manner, a step of editing the combined image (200) comprising:
- a step of selecting an image source (210);
- a step of selecting (230) a portion of the selected image; and
- a step of selecting (250) a format for displaying said selected image portion, in a combined image;
- after the end of the step of editing the combined image, a step of memorizing (270) each image source, each image portion and each display format of the combined image; and
- a step of displaying (280) the combined image, during which the display of each image portion is automatically refreshed.

2. Method according to claim 1, **characterized in that**, during the display step (280), for at least one image portion, each refresh that changes the appearance of said image portion is signaled (290).

3. Method according to any one of claims 1 or 2, **characterized in that** it comprises a step of selecting a source of sound signals (262) and, during the step of displaying the combined image, the sound signals coming from said sound signal source are output.

4. Method according to any one of claims 1 to 3, **characterized in that**, during at least one step of selecting an image source (210), an electronic address for a page accessible on a computer network (212) is selected.

5. Method according to any one of claims 1 to 4, **characterized in that**, during at least one step of selecting an image source (210), a video file (214, 216) is selected.

6. Method according to any one of claims 1 to 5, **characterized in that**, during at least one step of selecting an image portion (230), at least two opposite corners of a rectangle are selected, with a pointing device.

7. Method according to any one of claims 1 to 6, **characterized in that**, during at least one step of selecting an image portion (230), the content of a code describing a page supplied by the image source is analyzed and the image portions suitable for selection are extracted then the user selects, with a pointing device, a said image portion.

8. Method according to any one of claims 1 to 7, **characterized in that**, during at least one step of selecting an image portion (230), said selected image portion is dragged and dropped, with a pointing device.

9. Method according to any one of claims 1 to 8, **characterized in that**, during at least one step of selecting a display format (250) for a selected image portion, at least two edges of two image portions are automatically juxtaposed.

10. Method according to any one of claims 1 to 9, **characterized in that**, during the step of displaying the combined image (280), for at least one of the image portions, said image portion is displayed only if its content has been altered during a predefined preceding period of time (292).

11. Device for editing audio-visual programs, **characterized in that** it comprises:
- a means of editing a combined image, designed to carry out, in an iterative manner:
- a selection of an image source,
- a selection of a portion of the selected image and
- a selection of a format for displaying said selected image portion, in a combined image;
- a means of memorization designed to memorize each image source, each image portion and each display format of the combined image and
- a means of displaying the combined image designed to automatically refresh each image portion displayed is automatically refreshed.

12. Device according to claim 11, **characterized in that** the refresh means is designed, for at least one image portion, to signal each refresh that changes the appearance of said image portion.

13. Device according to any one of claims 11 or 12, **characterized in that** it comprises a means of selecting a source of sound signals, and the means of displaying the combined image is designed to output the sound signals coming from said sound signal source.

14. Device according to any one of claims 11 to 13, **characterized in that** the means of editing the combined image is designed, for the selection of an image source, to select an electronic address of a page accessible on a computer network.

15. Device according to any one of claims 11 to 14, **characterized in that** the means of editing the combined image is designed, for the selection of an image source, to select a video file.

16. Device according to any one of claims 11 to 15, **characterized in that** the means of editing the combined image comprises a pointing device and is designed, for the selection of an image portion, to select, with said pointing device, at least two opposite corners of a rectangle.

17. Device according to any one of claims 11 to 16, **characterized in that** the means of selecting an image portion is designed to analyze the content of a code describing a page supplied by the image source in order to extract image portions designed to be selected by the user with a pointing device.

18. Device according to any one of claims 11 to 17, **characterized in that** the means of editing the combined image comprises a pointing device and is designed, for the selection of an image portion, to select, with said pointing device, drag and drop said selected image portion.

19. Device according to any one of claims 11 to 18, **characterized in that** the means of editing the combined image is designed, for the selection of an image format, to automatically juxtapose at least two edges of two image portions.

20. Device according to any one of claims 11 to 19, **characterized in that** the means of editing the combined image is designed, for at least one of the image portions, to only display said image portion if its content has been altered during a predefined preceding period of time.
